# EUROPEAN PATENT SPECIFICATION

(11) **EP 3 873 103 B1**
(45) Date of publication and mention of the grant of the patent: **08.11.2023**
(21) Application number: 19875773.4
(22) Date of filing: 23.10.2019
(51) Int. Cl.: H04Q 11/00, H04B 10/079

(54) **BURST-TYPE LONG LUMINESCENCE INTERFERENCE ONU POSITIONING METHOD AND APPARATUS**
VERFAHREN UND VORRICHTUNG ZUR ONU-POSITIONIERUNG MIT LANGER BURST-LUMINESZENZINTERFERENZ
PROCÉDÉ ET APPAREIL DE POSITIONNEMENT D'ONU À INTERFÉRENCE DE LUMINESCENCE LONGUE DE TYPE SALVE

(30) Priority: 25.10.2018 CN 201811248676
(43) Date of publication of application: 01.09.2021
(73) Proprietor: ZTE Corporation, Shenzhen, Guangdong 518057 (CN)
(72) Inventor: YU, Chendong, Shenzhen, Guangdong 518057 (CN)
(74) Representative: Ricker, Mathias
(86) International application number: PCT/CN2019/112825
(87) International publication number: WO 2020/083319

(56) References cited:
- EP-A1- 2 768 160
- EP-A2- 1 802 007
- "Rogue optical network unit (ONU) considerations; G.Sup49 (02/11)", ITU-T STANDARD, INTERNATIONAL TELECOMMUNICATION UNION, GENEVA ; CH, no. G.Sup49 (02/11), 25 February 2011 (2011-02-25), pages 1-16, XP017467827, [retrieved on 2011-07-25]

## Description

### TECHNICAL FIELD

The present invention relates to the technical filed of passive optical networks and, in particular, to a method and apparatus for positioning an optical network unit, ONU, with burst-type abnormal luminescence interference.

### BACKGROUND

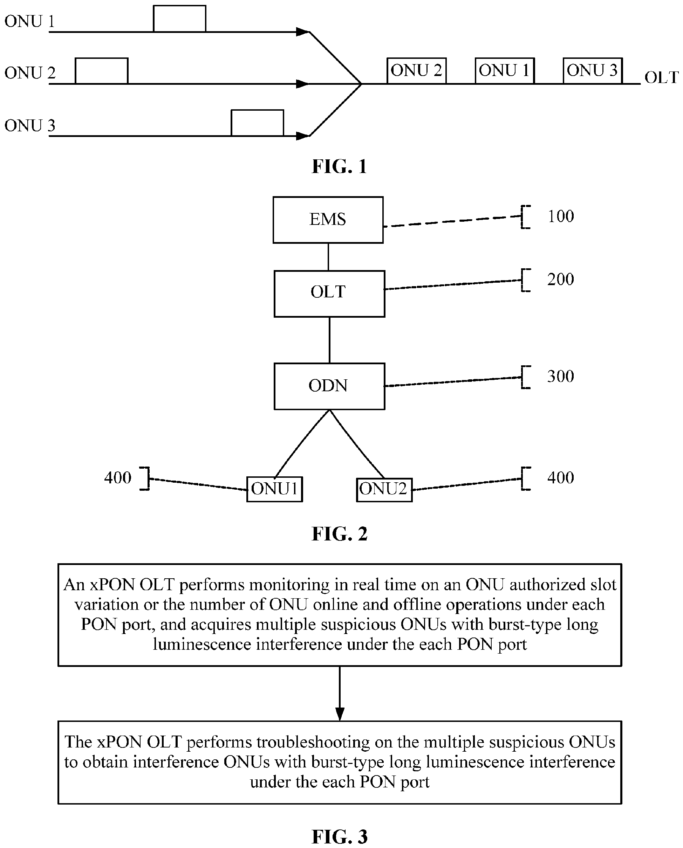

In a passive optical network (xPON) of a passive optical network, a common network system is shown in FIG. 2. The system is composed of an element management system (EMS) 100, an optical line terminal (OLT) 200, an optical distribution network (ODN) 300 and several optical network units (ONUs) 400. The EMS 100 is configured for configuration, management, and maintenance of the OLT 200 and the xPON network. The EMS maintains and manages history information and related alarm and notification messages of the OLT 200 and ONUs 400, and may complete determination of specific abnormal ONUs and finding of the specific physical positions of the specific abnormal ONUs according to the related alarm and notification messages. The OLT 200 is configured to start an ONU discovery process, allocate a link identifier for the ONU 400 to complete the registration and authentication of the ONU 400 on the OLT 200, and allocate corresponding uplink slots for the ONU 400. The ONU 400 uploads data in the slots allocated by the OLT 200 to the ONU 400, and each slot in an uplink direction is normally exclusively occupied by the ONU. The OLT 200 maintains an ONU online history information table based on a PON port as a unit, starts a long light emission detection through a round-trip time (RTT) drift or an ONU uplink error code alarm, and positions long-light-emission ONUs through a relevant strategy. The ODN 300 is configured to connect ONUs 400 of different numbers under the OLT 200. As a direct physical connection channel between the OLT 200 and the ONUs 400, the ODN 300 may be composed of multiple physical components. The ONU 400 is configured to play a role of a terminal equipment of a home user, receive the management of the OLT 200, and receive the link identifier distributed by the OLT 200 in the registration process; and upload data in a slot window uniformly distributed by the OLT 200 to complete service. The OLT serves as a central office equipment to be coupled with multiple ONU equipments through an ODN network. In a case where an xPON network serves as a point-to-multipoint topology, an OLT allocates an uplink transmission slot to an ONU through a time division multiple access (TDMA) mode, and the ONU must turn on a laser and send data in an uplink bandwidth map (Bwmap) allocated by the OLT.

FIG. 1 illustrates an xPON registration flow diagram in which an ethernet passive optical network (EPON) is taken as an example, and other systems are similar. In order to ensure effective transmission of uplink data of each ONU, ONUs may only turn on the laser and send data in different uplink slots (that is, authorized slots, and each slot is independent from each other) which are controlled and allocated (based on the ONU identifier) by the OLT. The ONUs must turn off the laser (remain silent) during unauthorized slots to avoid the effect of emission of the laser on other uplink slots.

In the xPON network, the OLT allocates a unique identifier for each ONU as a link identifier of the ONU in units of a PON port (for example, a logical link identifier (LLID) is used as the unique identifier of the ONU in an EPON system, and an ONU identifier (ONUID) is used as the unique identifier of the ONU in a GPON system). The OLT allocates an authorized slot to the ONU according to the ONU link identifier. When a certain ONU under the same PON port is abnormal and the certain ONU turns on the laser or sends data in an unauthorized slot without the control of the OLT, long luminescence interference is generated. Then, an interference is caused to other ONU uplink sending data which normally works by using a normally allocated slot of the PON port. Therefore, normal data cannot be recovered, so that uplink packet loss is generated. In a serious condition, the related interfered ONU even goes offline. The long luminescence interference may be divided into two types according to an interference time, which are continuous long luminescence interference and burst-type abnormal luminescence interference.
1) Continuous long luminescence interference: the long luminescence interference has a long duration, and the long luminescence interference can be directly detected by a hardware signal as long as the duration is greater than a hardware detection precision (the principle is as follows: optical signals in the PON uplink direction are burst and non-continuous; if a continuous optical signal is detected, uplink interference is considered to exist); moreover, uplink slots of all ONUs are interfered, the trouble phenomenon is obvious and is easy to be detected. Since the duration of the interference is long, the time available for positioning the trouble source is also long.
2) Burst-type abnormal luminescence interference: if the long luminescence interference is burst, duration is short and duration is less than the hardware detection precision, the long-light-emission interference cannot be effectively detected; moreover, the duration of the trouble is short, so that only a part of ONUs under the corresponding PON port are influenced, and a traditional positioning method generally needs long positioning time, so that it is difficult for positioning the trouble source.

The EP1802007A2 discloses a passive optical network maintenance method, an optical network unit and an optical line terminal. It relates to a passive optical network providing a method for maintaining the passive optical network, an optical network unit, and an optical line terminal to solve the problem of the optical line terminal being in a constant light emitting state. The method allows the optical line terminal to determine whether the continuous seizure time of an upstream channel exceeds the preset threshold, and if so, detect the failed optical network unit that continuously seizes the upstream channel and use a control message or control signal to instruct the failed optical network unit to turn off power supply to its transmitting circuit.

Further relevant technologies are also known from the document "Rogue optical network unit (ONU) considerations; G.Sup49 (02/11)", ITU-T STANDARD, International Telecommunication Union, Geneva, XP017467827, 25 February 2011.

### SUMMARY

According to the solutions provided by embodiments of the present invention, the following problems are to be solved. Some optical network units (ONUs) in the existing passive optical network (xPON) emit light outside an optical line terminal (OLT) authorized slot due to software and hardware abnormality, which has an influence on data transmission of the ONU in adjacent slots. Seriously, adjacent ONUs related to above ONUs go offline. In addition, the burst-type interference has a short duration and the range/degree of the interfered ONUs of burst interference is uncertain, which causes a high detection difficulty and a positioning efficiency.

The problem of the present invention is solved by a method for positioning an ONU according to the independent claim 1 as well as by an apparatus for positioning an ONU according to the independent claim 5. The dependent claims refer to further advantageous developments of the present invention.

### BRIEF DESCRIPTION OF DRAWINGS

FIG. 1 is a diagram showing xPON uplink time division multiple access provided by the related art;
FIG. 2 is a diagram showing a network topology of an xPON provided by the related art;
FIG. 3 is a flowchart of a method for positioning an ONU with burst-type abnormal luminescence interference according to an embodiment of the present invention;
FIG. 4 is a diagram showing an apparatus for positioning an ONU with burst-type abnormal luminescence interference according to an embodiment of the present invention;
FIG. 5 is a flowchart of a processing method of an xPON device for detecting and positioning an ONU with burst-type abnormal luminescence interference according to an embodiment of the present invention;
FIG. 6 is a flow chart of recording ONU online and offline information and slot corresponding relationships according to an embodiment of the present invention;
FIG. 7 is an exemplary diagram showing slot corresponding relationships in multiple DBA periods when backward interference (an interference source is in the middle of a queue) occurs according to an example of the present invention;
FIG. 8 is an exemplary diagram showing slot corresponding relationships in multiple DBA periods when backward interference (an interference source is at the tail of a queue) occurs according to an example of the present invention;
FIG. 9 is an exemplary diagram showing slot corresponding relationships in multiple DBA periods when forward interference (an interference source is in the middle of a queue) occurs according to an example of the present invention;
FIG. 10 is an exemplary diagram showing slot corresponding relationships in multiple DBA periods when forward interference (an interference source is at the head of a queue) occurs according to an example of the present invention;
FIG. 11 is a flowchart of determining suspicious ONUs according to an example of the present invention;
FIG. 12 is a flowchart of setting weights for suspicious ONUs according to an example of the present invention;
FIG. 13 is a flowchart of determining abnormal ONUs according to an example of the present invention; and
FIG. 14 is a determination flowchart of updating weights and automatic learning for re-detection according to an example of the present invention.

### DETAILED DESCRIPTION

Embodiments and examples of the present invention are described below in detail in conjunction with the drawings. It should be understood that the preferred embodiments described below are intended to illustrate and explain the present invention and not to limit the present invention. Burst-type abnormal luminescence interference of an ONU substantially refers to that an authorized slot of a trouble ONU interferes with one or more authorized slots adjacently before (after) the authorized slot of the trouble ONU in a time domain, which causes ONUs within these authorized slots to be abnormal.

Burst-type abnormal luminescence interference is a major hidden danger for a PON based on a TDMA mechanism, and burst-type abnormal luminescence interference also exists in PONs based on other mechanisms that use a TDMA manner to manage an uplink authorized slot of an ONU. In view of the above problems, according to the present invention, the corresponding relationship between an uplink slot allocated by a PON and an ONU identifier is directly detected, a suspicious interference ONU adjacent to an interfered slot is found out, and positioning efficiency is continuously improved through weight configuration. In this way, effective detection and high-efficiency positioning of an ONU with burst-type abnormal luminescence interference is achieved, and problems of detection accuracy limitation and positioning difficulties brought by a traditional method may be overcome.

The present invention adopts the corresponding relationship of ONU authorized slot allocation by a PON system as a detection condition to find out the ONU adjacent to the interfered slot as the suspicious interference ONU, which does not depend on the type of long luminescence and a hardware capability. Meanwhile, long luminescence interference is substantially the interference to a dynamic authorized slot, so that the accuracy of determining the suspicious ONU is greatly improved through the detection on an authorized slot variation. Secondly, a relatively small range of suspicious ONUs is determined and weights for the suspicious ONUs are set. Related processing is performed on a small number of ONUs according to interference weights. Then, the setting of weights is optimized through the feedback of processing results. Therefore, the efficiency is greatly improved compared with the traditional method, and the efficiency is continuously improved in multiple rounds of processing.

FIG. 3 is a flowchart of a method for positioning an ONU with burst-type abnormal luminescence interference according to an embodiment of the present invention. As shown in FIG. 3, the method includes the steps described below. In step one, an xPON OLT performs monitoring in real time on an ONU authorized slot variation or the number of ONU online and offline operations under each PON port, and acquires multiple suspicious ONUs with burst-type abnormal luminescence interference under the each PON port; in step two, the xPON OLT performs troubleshooting on the multiple suspicious ONUs to obtain interference ONUs with burst-type abnormal luminescence interference under the each PON port.

The step one in which the xPON OLT performs monitoring in real time on the ONU authorized slot variation and the number of the ONU online and offline operations under the each PON port, and acquires the multiple suspicious ONUs with burst-type abnormal luminescence interference under the each PON port includes the steps described below. The xPON OLT performs inspection on a slot configuration mechanism of uplink bandwidth of the each PON port and determines whether the slot configuration mechanism of the uplink bandwidth of the each PON port is a dynamic slot configuration mechanism or a static slot configuration mechanism. In response to the slot configuration mechanism of the uplink bandwidth of the each PON port being determined to be the dynamic slot configuration mechanism, the xPON OLT performs monitoring in real time on the ONU authorized slot variation and determines the multiple suspicious ONUs with burst-type abnormal luminescence interference under the each PON port. In response to the slot configuration mechanism of the uplink bandwidth of the PON port being determined to be the static slot configuration mechanism, the xPON OLT performs monitoring in real time on the number of the ONU online and offline operations and determines the multiple suspicious ONUs with burst-type abnormal luminescence interference under the each PON port.

The step two in which the xPON OLT performs troubleshooting on the multiple suspicious ONUs to obtain interference ONUs with burst-type abnormal luminescence interference under the each PON port includes the steps described below. The xPON OLT respectively sets interference weights for the multiple suspicious ONUs in each detection period to obtain an interference weight value of each of the multiple suspicious ONUs; and the xPON OLT sequentially performs troubleshooting on the multiple suspicious ONUs according to a numerical order of interference weight values to obtain the interference ONUs with burst-type abnormal luminescence interference under the each PON port.

The step in which the xPON OLT performs monitoring in real time on the ONU authorized slot variation and determines the multiple suspicious ONUs with burst-type abnormal luminescence interference under the each PON port includes the steps described below. The xPON OLT finds out multiple slots adjacent to a variation range of multiple ONU slots in time sequence and ONUs corresponding to the multiple slots according to a change of a corresponding relationship between an ONU registration authentication identifier and an ONU authorized slot consecutively occurring in multiple dynamic DBA periods of the each PON port, configures the multiple slots as multiple suspicious slots, and configures the ONUs corresponding to the multiple suspicious slots as the multiple suspicious ONUs with burst-type abnormal luminescence interference.

In response to the slot configuration mechanism of the uplink bandwidth of the each PON port being the dynamic slot configuration mechanism, the burst-type abnormal luminescence interference includes forward burst-type abnormal luminescence interference and backward burst-type abnormal luminescence interference. The step in which the xPON OLT respectively set the interference weights for the multiple suspicious ONUs in the each detection period to obtain the interference weight value of the each of the multiple suspicious ONUs includes the steps described below. In response to the burst-type abnormal luminescence interference being the forward burst-type abnormal luminescence interference, the xPON OLT sets a highest interference weight for an ONU corresponding to a foremost slot of the multiple suspicious ONUs in the each detection period, where interference weights of other suspicious ONUs sequentially decrease according to a slot backward order. In response to the burst-type abnormal luminescence interference being the backward burst-type abnormal luminescence interference, the xPON OLT sets a highest interference weight for an ONU corresponding to a backmost slot of the multiple suspicious ONUs in the each detection period, where interference weights of other suspicious ONUs sequentially decrease according to a slot forward order.

The step in which the xPON OLT performs monitoring in real time on the number of the ONU online and offline operations and determines the multiple suspicious ONUs with burst-type abnormal luminescence interference under the each PON port includes the steps described below. The xPON OLT performs counting on the number of the ONU online and offline operations during a set period of the each PON port to find out multiple abnormal ONUs whose number of the ONU online and offline operations is not within a preset range of numbers of the ONU online and offline operations and configures the multiple abnormal ONUs as the multiple suspicious ONUs with burst-type abnormal luminescence interference.

The step in which the xPON OLT performs counting on the number of the ONU online and offline operations during the set period of the each PON port to find out the multiple abnormal ONUs whose number of the ONU online and offline operations is not within the preset range of the numbers of the ONU online and offline operations includes the steps described below. The xPON OLT counts and records, based on an absolute time, a first set of the numbers of the ONU online and offline operations of the each PON port during the set period, or counts and records, based on a relative time, a second set of the numbers of the ONU online and offline operations of the PON port during the set period taking a current time as a reference; and the xPON OLT respectively compares each number in the first set of the numbers of the ONU online and offline operations or each number in the second set of the numbers of the ONU online and offline operations with the preset range of the numbers of the ONU online and offline operations to acquire the multiple abnormal ONUs. The preset range includes a range of the numbers of ONU offline operations under a PON port, a statistical distribution discrete range of numbers of the ONU offline operations under the PON port, and a difference range between a specific number of the ONU offline operations and an average of the numbers of the ONU offline operations under the PON port.

The step in which the xPON OLT sequentially performs the troubleshooting on the multiple suspicious ONUs according to the numerical order of the interference weight values to obtain the interference ONUs with burst-type abnormal luminescence interference under the each PON port includes the steps described below. The xPON OLT sequentially turns off the multiple suspicious ONUs one by one in a one-by-one turn-off manner according to the numerical order of the interference weight values, and determines the suspicious ONUs whose trouble disappears in an ob servation period as the interference ONUs with burst-type abnormal luminescence interference; or the xPON OLT turns off the multiple suspicious ONUs in batches by adopting a dichotomy manner according to the numerical order of the interference weight values and determines the suspicious ONUs whose trouble disappears in an observation period as the interference ONUs with burst-type abnormal luminescence interference.

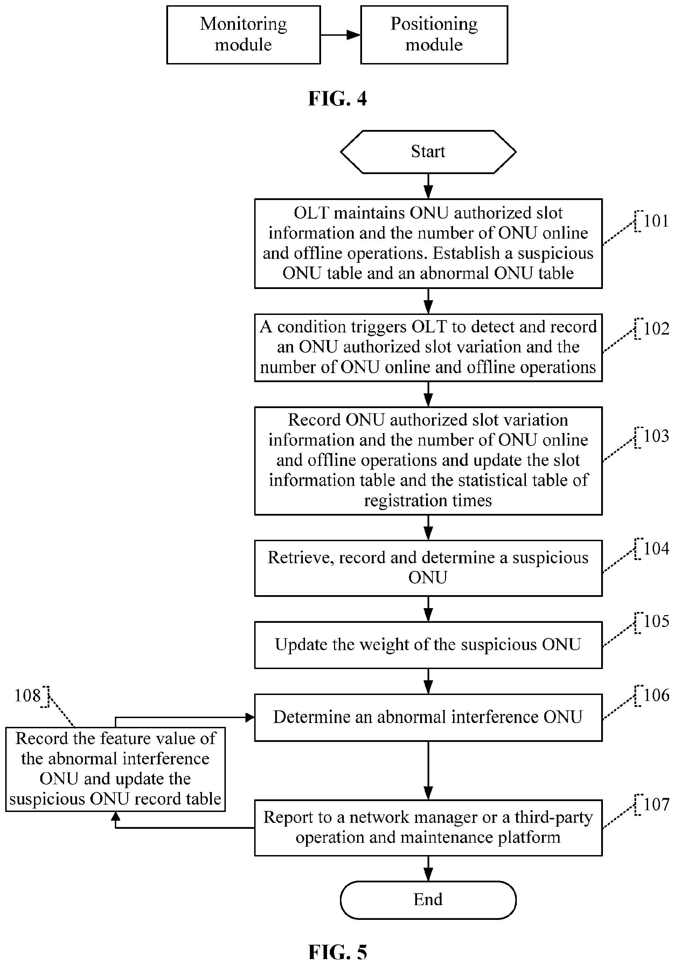

FIG. 4 is a diagram showing an apparatus for positioning an ONU with burst-type abnormal luminescence interference according to an embodiment of the present invention. As shown in FIG. 4, the apparatus includes a monitoring module and a positioning module. The monitoring module is configured to perform monitoring in real time on an ONU authorized slot variation or the number of ONU online and offline operations under each PON port and acquire multiple suspicious ONUs with burst-type abnormal luminescence interference under the each PON port. The positioning module is configured to perform troubleshooting on the multiple suspicious ONUs to obtain interference ONUs with burst-type abnormal luminescence interference under the each PON port.

An embodiment of the present invention provides a device for positioning an ONU with burst-type abnormal luminescence interference. The device includes a processor and a memory coupled to the processor. The memory stores thereon a program for positioning an ONU with burst-type abnormal luminescence interference executable by the processor, and the program for positioning an ONU with burst-type abnormal luminescence interference, when executed by the processor, implements steps of the method for positioning an ONU with burst-type abnormal luminescence interference provided by the embodiment of the present invention.

An embodiment of the present invention provides a computer storage medium. The computer storage medium stores a program for positioning an ONU with burst-type abnormal luminescence interference. The program for positioning an ONU with burst-type abnormal luminescence interference, when executed by a processor, implements steps of the method for positioning an ONU with burst-type abnormal luminescence interference provided by the embodiment of the present invention.

An embodiment of the present invention provides a computer program product, which includes a computer program stored on a non-transitory computer-readable storage medium. The computer program includes program instructions which, when executed by a computer, cause the computer to execute the method in any one of the method embodiments described above.

The detection and positioning method of the embodiments of the present invention is consistent in LLIDs (in an EPON system), ONUIDs (in a GPON system) and other systems adopting a TDMA mechanism.

FIG. 5 is a flowchart of a processing method of an xPON device for detecting and positioning an ONU with burst-type abnormal luminescence interference according to an embodiment of the present invention. As shown in FIG. 5, the processing method includes the steps described below. In step S101, the xPON OLT records and maintains a table of corresponding relationships (hereinafter referred to as an authorized slot information table, for example, as shown in Table 1) between ONU registration authentication identifiers (including but not limited to LLID/ONU ID/ALLOC ID and other identifiers that are actually used to allocate uplink slots for ONUs) and authorized slots in multiple DBA allocation periods in units of a PON port. Where the content of the table includes but is not limited to: an order number of a DBA period, a serial number of an uplink authorized slot, and ONU information (the ONU information includes: an ONU registration authentication identifier, an ONU configuration index, and the number of ONU online and offline operations); and the xPON OLT initializes and records the ONU authorized slot information table according to a certain condition (including but not limited to: setting a timer, or triggered by ONU online and offline events) .

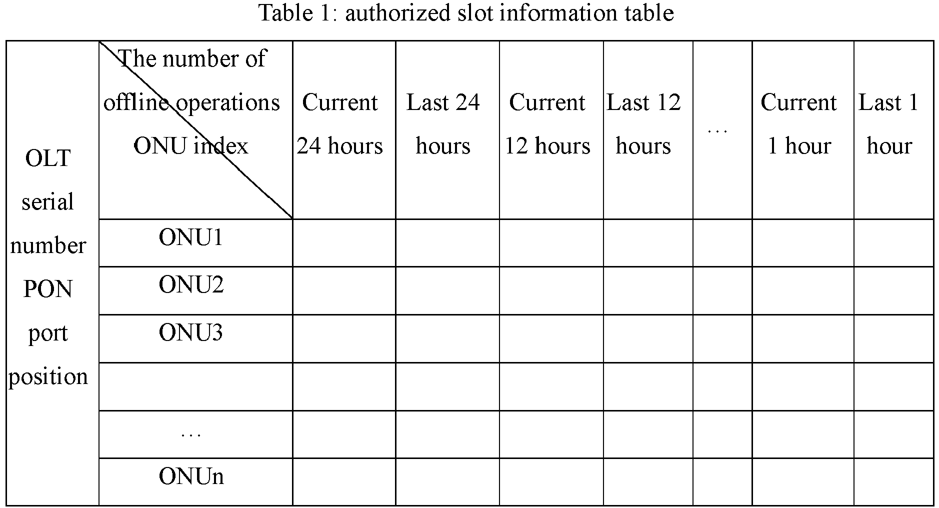

The xPON OLT records a table of the number of online and offline operations of the ONU under the PON port in different time ranges (hereinafter referred to as a statistical table of registration times, for example, as shown in Table 2) in units of a PON port. A time range may be configured according to a certain strategy, and the certain strategy includes but not limits to: an ONU configuration index and counting on the number of online and offline operations based on different time units (such as the number of online and offline operations during current 24 hours (an absolute time), and the number of online and offline operations during last 24 hours (a relative time); the number of online and offline operations during current 12 hours (an absolute time), and the number of online and offline operations during last 12 hours (a relative time); the number of online and offline operations during current 4 hours (an absolute time), and the number of online and offline operations during last 4 hours (a relative time); the number of online and offline operations during current 1 hour (an absolute time), and the number of online and offline operations during last 1 hour (a relative time), etc.).

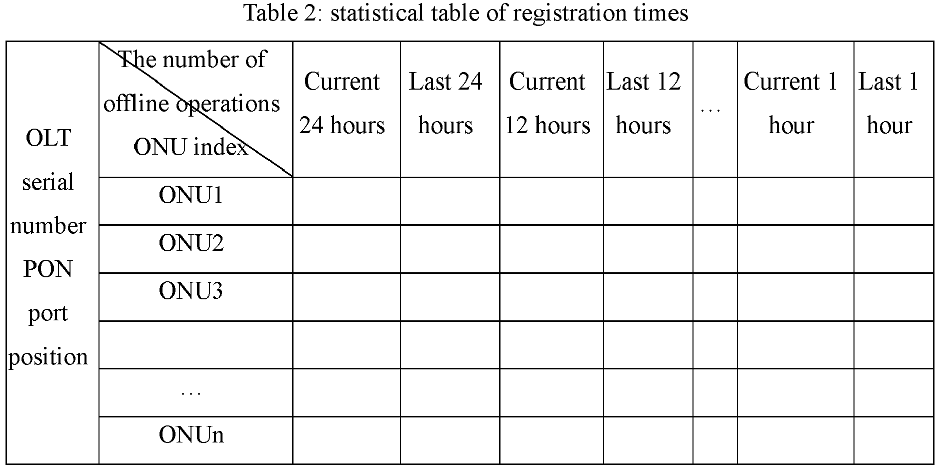

The xPON OLT records and maintains a suspicious ONU record table in units of a PON port, for example, as shown in Table 3 (the content of the table includes but is not limited to: an ONU configuration index, an ONU registration authentication identifier, an ONU feature value, and a weight).

**Table 3: suspicious ONU record table**

| Sequence number | OLT serial number/ PON port position | ONU configuration index | ONU registration authentication identifier | ONU feature value | Weight |
|---|---|---|---|---|---|
| 1 | | | | | |
| 2 | | | | | |
| 3 | | | | | |
| 4 | | | | | |
| ... | | | | | |
| N | | | | | |

The xPON OLT records and maintains an abnormal interference ONU record table, for example, as shown in Table 4, the content includes but is not limited to an ONU identifier (including but not limited to mac and sn), an ONU feature value (including but not limited to: a model, a type, and a version) .

**Table 4: abnormal interference ONU record table**

| Sequence number | OLT serial number/ PON port position | ONU configuration index | ONU registration identifier | | ONU feature value | | |
|---|---|---|---|---|---|---|---|
| | | | ONU MAC | ONU SN | Vendor id | Type | Version |
| 1 | | | | | | | |
| 2 | | | | | | | |
| 3 | | | | | | | |
| 4 | | | | | | | |
| ... | | | | | | | |
| N | | | | | | | |

In step S 102: when the PON port satisfies a certain triggering condition, the xPON OLT starts to detect and record an ONU authorized slot variation and the number of ONU online and offline operations in units of the PON port. The default triggering condition includes but is not limited to: during a certain period of time (including but not limited to be manually specified or be configured according to a certain strategy, etc.), offline operations of multiple ONUs under the PON port occur, or the number of offline operations of ONUs under the PON port is higher than a certain threshold (the threshold may be manually set or specified by default according to hardware characteristics) or a combination of multiple conditions. The triggering condition for the detection may be manually configured.

In step S103, ONU authorized slot variation information and the number of ONU online and offline operations are recorded consecutively according to a certain strategy, and the authorized slot information table and the statistical table of registration times are updated synchronously according to the DBA bandwidth allocation period. The PON port consecutively records the table of corresponding relationships between ONU registration authentication identifiers and authorized slots in multiple dynamic DBA allocation periods. When the corresponding relationship (hereinafter referred to as an ONU slot relationship) between the ONU registration authentication identifier and the authorized slot changes due to offline or online operations of the ONU, the PON port records the ONU slot relationship and maintains and updates the authorized slot information table; when the offline or online operations of the ONU occur, the PON port records the number of ONU online and offline operations in ONU information and maintains and updates the statistical table of registration times. Multiple dynamic DBA periods are consecutively recorded, and the number of recording times may be manually set or be confirmed according to a certain method. The method includes but is not limited to: determining by the number of ONUs configured under the PON port multiplied by a parameter n (the number of recording times includes a default value of n, such as 3, which may be manually modified); or consecutively recording and then recording m dynamic DBA periods after the triggering condition disappears (the number of recording times includes a default value of m, such as 10, which may be manually modified).

In step S104, that is, in the fourth step, the suspicious ONUs are determined in combination of allocation characteristics of the uplink slots by the PON port. In response to the uplink bandwidth being dynamically allocated (that is, after an ONU goes offline, a new uplink authorized slot is allocated after the ONU goes online again, that is, the corresponding relationship of the ONU authorized slot changes), in combination of the initialized ONU authorized slot information table and the ONU authorized slot information of each DBA period, whether the corresponding relationship between ONUs and slots in each dynamic DBA period in the authorized slot information table has changed is read and detected; if the change of the corresponding relationship between the ONUs and the slots in multiple DBA periods occurs, slots adjacent to a variation range of multiple ONU slots in time sequence and ONUs corresponding to the slots are found out, the adjacent slots are configured as the suspicious slots, and the corresponding ONUs are configured as the suspicious ONUs. In response to the uplink bandwidth being statically allocated (that is, after an ONU goes offline, an original uplink authorized slot is allocated after the ONU goes online again, that is, the corresponding relationship of the ONU authorized slot does not change), the difference between numbers of ONU online and offline operations in a certain period is analyzed, and thereby the ONU with the largest difference is found out and determined as the suspicious ONU.

In step S105, suspicious ONU information is recorded and the suspicious ONU record table is updated (the content of the suspicious ONU record table includes but is not limited to: an ONU configuration index, an ONU registration authentication identifier, an ONU feature value, and a weight). Suspicious weights of ONUs in a suspicious ONU list are set according to a certain strategy. The strategy includes but is not limited to depending on a forward-and-backward order relationship with critical time sequence and the number of offline operations, etc.

In step S 106, according to the descending order of the suspicious weights in the suspicious ONU list, the power supply of a corresponding ONU optical transmitter is remotely turned off according to a certain method. For example, the suspicious ONU with the highest weight is firstly turned off, and observation is performed for a period of time; if the trouble still exists, the suspicious ONU with the second highest weight is turned off, and observation is performed for another period of time, and so on until the trouble disappears. Then, it is confirmed that the ONU currently turned off is a trouble interference ONU, and the abnormal interference ONU record table is recorded and updated. The method includes but is not limited to a turn-off method. The turn-off method may be used to eliminate interference by methods such as remotely turning off the power supply of a specific ONU optical transmitter. After the specific ONU is turned off, whether the trouble exists (that is, whether the triggering condition is satisfied) is detected in an observation period. If the trouble does not exist, the ONU is the trouble interference ONU; otherwise, the next or next batch of ONUs are turned off according to an algorithm until all ONUs are traversed.

In step 107, information that can uniquely identify the ONU such as the mac address/sn of an abnormal interference ONU is queried, the information is reported to a network manager or a third-party operation and maintenance platform through an alarm or notification, and operation and maintenance personnel processes the abnormal interference ONU. According to a certain strategy in combination with user accounting information, the abnormal interference ONU is actively remotely isolated, or the specific position is found out and processed on site.

The network manager acquires the abnormal ONU information record table reported by the OLT, and maintains and updates the local abnormal ONU information record table of the network manager.

In step S108, the feature value (model/version) of the abnormal interference ONU is recorded. When the triggering condition for the detection is satisfied in the next round, a new suspicious ONU record table (the content includes but is not limited to: an ONU configuration index, an ONU registration authentication identifier, an ONU feature value, and a weight) is updated, weights of related ONUs in the suspicious ONU record table are updated according to a matching situation of ONU features, and the sixth step is performed for positioning.

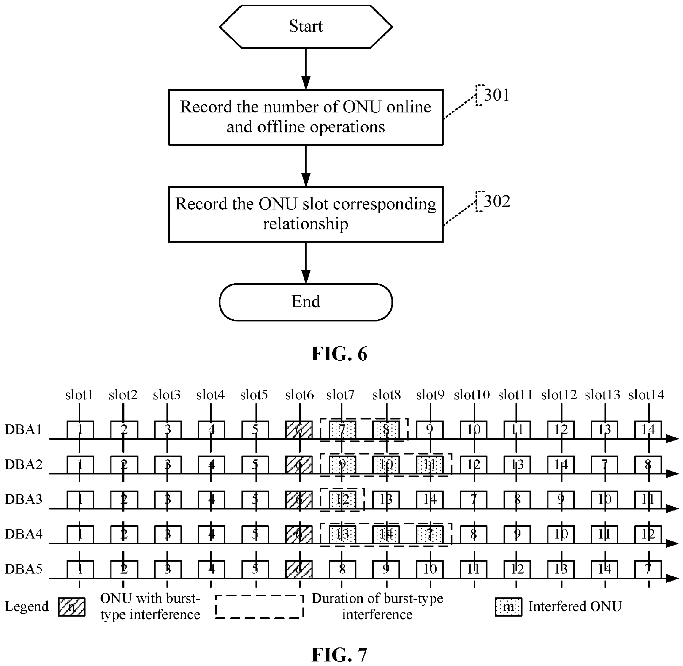

FIG. 6 is a flow chart of recording the corresponding relationship between the ONU online and offline information and the slot according to an embodiment of the present invention. As shown in FIG. 6, ONU authorized slot variation information and the number of ONU online and offline operations are recorded consecutively according to a certain strategy, and the authorized slot information table and the statistical table of registration times are updated synchronously according to the DBA bandwidth allocation period. The PON port consecutively records the table of corresponding relationships between ONU registration authentication identifiers and authorized slots in multiple dynamic DBA allocation periods. When the corresponding relationship (hereinafter referred to as an ONU slot relationship) between the ONU registration authentication identifier and the authorized slot changes due to offline or online operations of the ONU, the PON port records the ONU slot relationship and maintains and updates the authorized slot information table; when the offline or online operations of the ONU occur, the PON port records the number of ONU online and offline operations in ONU information and maintains and updates the statistical table of registration times. Multiple dynamic DBA periods are consecutively recorded, and the number of recording times may be manually set or be confirmed according to a certain method. The method includes but is not limited to: determining by the number of ONUs configured under the PON port multiplied by a parameter n (the number of recording times includes a default value of n, such as 3, which may be manually modified); or consecutively recording and then recording m dynamic DBA periods after the triggering condition disappears (the number of recording times includes a default value of m, such as 10, which may be manually modified). The steps described below are included. In step S301, when the offline or online operations of the ONU occur, the PON port maintains and updates the statistical table of registration times. The strategy includes but is not limited to: based on an absolute time, the number of ONU offline or online operations within a specified time unit is recorded; based on a relative time, the number of ONU offline or online operations within a specified time unit taking a current time as a reference is recorded. In step S302, when the corresponding relationship between the ONU registration authentication identifier and the authorized slot changes due to the offline or online operations of the ONU, the PON port maintains and updates the authorized slot information table.

The strategy includes but is not limited to: the PON port records the corresponding relationship between the ONU registration authentication identifier and the authorized slot in each dynamic DBA period. When the offline operations of the ONU occur, the PON port records the corresponding relationship between the ONU registration authentication identifier and the authorized slot in each dynamic DBA period; when the online operations of the ONU occur, the PON port records the corresponding relationship between the ONU registration authentication identifier and the authorized slot in each dynamic DBA period.

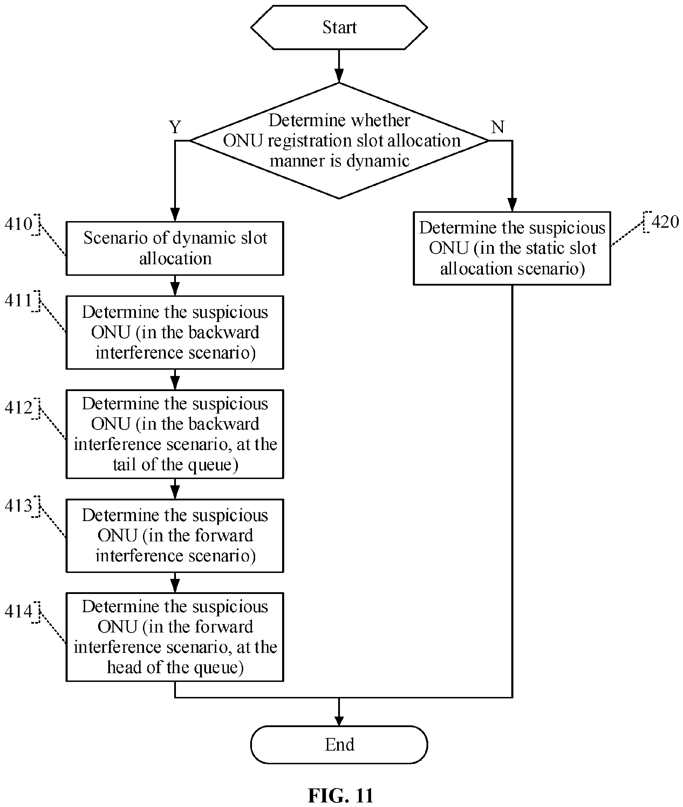

FIG. 11 is a flowchart of determining suspicious ONUs according to an example of the present invention. As shown in FIG. 11, the step in which in combination of the initialized ONU authorized slot information table and the ONU authorized slot information in each DBA period, whether the ONU slot relationship in each dynamic DBA period in the authorized slot information table has changed is read and detected, and the suspicious ONUs are determined in combination with slot allocation characteristics of the uplink bandwidth of the PON port includes the steps described below. In step S410, in response to the PON port adopting the dynamic slot configuration mechanism (that is, the PON port dynamically allocates a new ONU registration authentication identifier every time the ONU goes offline and goes online again), the ONU slot relationship and the corresponding number of ONU offline/online operations in x dynamic DBA periods are detected and recorded (the method for confirming the number of detection times includes but is not limited to: x may be a manually configured value and be assigned a default value according to a certain condition; or x = the number of ONUs under the PON port * n, and the DBA period whose ONU slot corresponding relationship and the previous period have not changed is omitted), and the change of the ONU slot relationship due to reasons such as the ONU going offline is excluded. In step S411, if the change of a single or consecutive multiple ONU slot relationships after a specific slot is detected (that refers to that offline operations of the ONU occur after the specific slot), and the ONU slot corresponding relationship before the specific slot remains stable, the specific slot is determined as a suspicious slot or several slots forward adjacent to the specific slot are determined as suspicious slots according to a certain strategy; and ONUs corresponding to the suspicious slots (determined according to the ONU configuration index or the ONU registration authentication identifier) are determined as suspicious ONUs.

Further, specific examples are as shown in FIG. 7. FIG. 7 is a diagram showing slot corresponding relationships in multiple DBA periods when backward interference (an interference source is in the middle of a queue) occurs. The backward interference refers to a case that the interference source is not at the tail of the queue, and the interference source slot is relatively fixed.

In period 1, an initial time sequence corresponding relationship is 1/2/3/4/5/6/7/8/9/10/11/12/13/14; ONUs 7/8 are interfered and go offline, and go online again in the next period.

In period 2, the time sequence corresponding relationship changes relative to the previous period, and the time sequence corresponding relationship of 1/2/3/4/5/6/7/8/9/10/11/12/13/14 changes to 1/2/3/4/5/6/9/10/11/12/13/14/7/8; ONUs 9/10/11 are interfered and go offline, and go online again in the next period.

In period 3, the time sequence corresponding relationship changes relative to the previous period, and the time sequence corresponding relationship of 1/2/3/4/5/6/9/10/11/12/13/14/7/8 changes to 1/2/3/4/5/6/12/13/14/7/8/9/10/11; ONU 12 is interfered and goes offline, and goes online again in the next period.

In period 4, the time sequence corresponding relationship changes relative to the previous period, and the time sequence corresponding relationship of 1/2/3/4/5/6/12/13/14/7/8/9/10/11 changes to 1/2/3/4/5/6/13/14/7/8/9/10/11/12; ONUs 13/14/7 are interfered and go offline, and go online again in the next period.

In period 5, the time sequence corresponding relationship changes relative to the previous period, and the time sequence corresponding relationship of 1/2/3/4/5/6/13/14/7/8/9/10/11/12 changes to 1/2/3/4/5/6/8/9/10/11/12/13/14/7.

Since ONU slot corresponding relationships for slots located after slot 6 change, and slot 6 is a critical slot, it is determined to be backward interference (the interference source is in the middle of the queue), and the corresponding ONU 6 is a critical suspicious ONU. According to a certain strategy, related ONUs (such as ONUs 4/5/6) forward adjacent to slot 6 are set as suspicious ONUs. The weight of the critical suspicious ONU is set to be the largest weight (such as priority 3), and weights (such as weight 2 for ONU5 and weight 1 for ONU4) are respectively set for other suspicious ONUs according to a certain strategy (such as that the weight is inversely proportional to the distance between the corresponding slot and the critical slot).

In step 412, if it is detected that slots allocated by consecutive ONU registration authentication identifiers are (have been) all shifted forward by one or more slots (that is, the offline operations for the ONU at the front of the entire queue occur in the corresponding DBA allocation period), and the first ONU of the ONU queue shifted forward occupies the first slot allocated by the DBA period; or a single or multiple ONU slot relationships after the specific slot at the tail of an authorized slot sequence change in multiple DBA allocation periods (or ONUs of multiple slots at the tail of an authorized slot sequence occur go offline in multiple DBA allocation periods), the last one or more ONUs (excluding the ONU at the front of the queue in an initial ONU slot relationship) in the ONU queue whose slots allocated by ONU registration authentication identifiers are all shifted forward are determined as suspicious ONUs; or a specific slot or related multiple slots before the corresponding slot whose multiple ONUs go offline at the tail of the authorized slot sequence in the DBA allocation period are determined as suspicious slots, and ONUs corresponding to the suspicious slots (determined according to the ONU configuration index or the ONU registration authentication identifier) as suspicious ONUs.

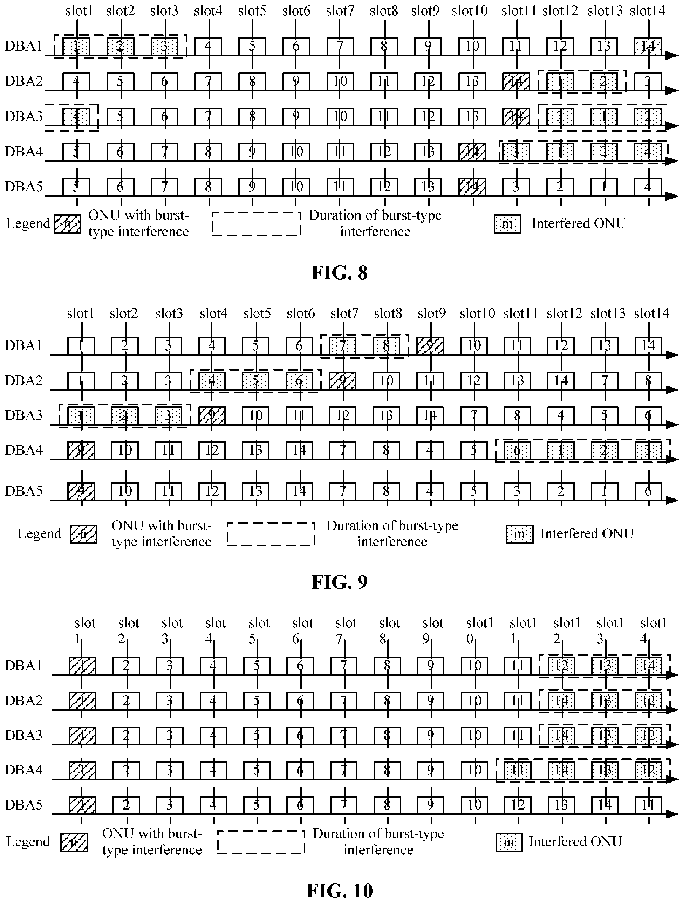

Further, specific examples are as shown in FIG. 8. FIG. 8 is a diagram of slot corresponding relationships in multiple DBA periods when backward interference (an interference source is at the tail of a queue) occurs. The backward interference refers to a case that the interference source is at the tail of the queue, and the interference source slot is relatively unfixed (shifted forward) and is gradually maintained stable.

In period 1, an initial time sequence corresponding relationship is 1/2/3/4/5/6/7/8/9/10/11/12/13/14; ONUs 1/2/3 are interfered and go offline, and go online again in the next period.

In period 2, the time sequence corresponding relationship changes relative to the previous period, all slot corresponding relationships are shifted forward, and the ONUs 1/2/3 going offline in the previous period go online at the tail of the queue. For example, the time sequence corresponding relationship of 1/2/3/4/5/6/7/8/9/10/11/12/13/14 changes to 4/5/6/7/8/9/10/11/ 12/13/14/1/2/3; ONUs 1/2 are interfered and go offline, and go online again in the next period.

In period 3, the time sequence corresponding relationship changes relative to the previous period, and the time sequence corresponding relationship of 4/5/6/7/8/9/10/11/12/13/14/1/2/3 changes to 4/5/6/7/8/9/10/11/12/13/14/3/1/2 (or the time sequence corresponding relationship does not change, but the number of online operations of the ONUs going offline in the previous period increases); ONUs 3/1/2/4 are interfered and go offline, and go online again in the next period. In period 4, the time sequence corresponding relationship changes relative to the previous period, and the time sequence corresponding relationship of 4/5/6/7/8/9/10/11/12/13/14/3/1/2 changes to 5/6/7/8/9/10/11/12/13/14/3/1/2/4 (or the time sequence corresponding relationship does not change, but the number of online operations of the ONUs going offline in the previous period increases); ONUs 3/1/2/4 are interfered and go offline, and go online again in the next period. In period 5, the time sequence corresponding relationship changes relative to the previous period, and the time sequence corresponding relationship of 5/6/7/8/9/10/11/12/13/14/3/1/2/4 changes to 5/6/7/8/9/10/11/12/13/14/3/2/1/4 (or the time sequence corresponding relationship does not change, but the number of online operations of the ONUs going offline in the previous period increases).

It can be seen that ONU 14 corresponds to a tail critical slot of a range for the time sequence being shifted forward, and the ONU time sequence relationships after the ONU 14 change or offline operations occur, so that it is determined to be backward interference (the interference source was at the tail of the queue), and the corresponding ONU 14 is a critical suspicious ONU. According to a certain strategy, related ONUs (such as ONUs 12/13/14) are set as suspicious ONUs. The weight of the critical ONU is set to be the largest weight (such as priority 3), and weights (such as weight 2 for ONU 13 and weight 1 for ONU12) are respectively set for other suspicious ONUs according to a certain strategy (such as that the weight is inversely proportional to the distance between the corresponding slot and the critical slot).

In step S413, if it is detected that slots allocated by a single or multiple ONU registration authentication identifiers are all shifted forward by one or more slots (that is, the offline operations of a single or multiple ONUs forward adjacent to the corresponding slot of the specific ONU in the entire queue occur in multiple corresponding DBA allocation periods), and the first ONU in an ONU slot relationship queue that has shifted forward does not occupy the first slot allocated by the DBA period, the foremost one or more ONUs in the ONU queue whose slots allocated by ONU registration authentication identifiers are all shifted forward are determined as suspicious ONUs.

Further, specific examples are as shown in FIG. 9. FIG. 9 is a diagram of slot corresponding relationships in multiple DBA periods when forward interference (an interference source is in the middle of a queue) occurs. The forward interference refers to a case that the interference source is in the queue, and the interference source slot is relatively unfixed (being shifted forward).

In period 1, an initial time sequence corresponding relationship is 1/2/3/4/5/6/7/8/9/10/11/12/13/14; ONUs 7/8 are interfered and go offline, and go online again in the next period.

In period 2, the time sequence corresponding relationship changes relative to the previous period, a part of slot corresponding relationships are shifted forward, and the ONUs 7/8 going offline in the previous period go online at the tail of the queue. For example, the time sequence corresponding relationship of 1/2/3/4/5/6/7/8/9/10/11/12/13/14 changes to 1/2/3/4/5/6/9/10/11/12/13/14/7/8; ONUs 4/5/6 are interfered and go offline, and go online again in the next period.

In period 3, the time sequence corresponding relationship changes relative to the previous period, a part of slot corresponding relationships are shifted forward, and the ONUs 4/5/6 going offline in the previous period go online at the tail of the queue. The time sequence corresponding relationship of 1/2/3/4/5/6/9/10/11/12/13/14/7/8 changes to 1/2/3/9/10/11/12/13/14/7/8/4/5/6; ONUs 1/2/3 are interfered and go offline, and go online again in the next period.

In period 4, the time sequence corresponding relationship changes relative to the previous period, a part of slot corresponding relationships are shifted forward, the ONU (such as ONU 9) who ranks foremost in the time sequence shifted forward in the previous multiple periods is shifted to the head of the sequence, and the ONUs 1/2/3 going offline in the previous period go online at the tail of the queue. The time sequence corresponding relationship of 1/2/3/9/10/11/12/13/14/7/8/4/5/6 changes to 9/10/11/12/13/14/7/8/4/5/6/1/2/3; ONUs 6/1/2/3 are interfered and go offline, and go online again in the next period.

In period 5, the time sequence corresponding relationship changes relative to the previous period, and the time sequence corresponding relationship of 9/10/11/12/13/14/7/8/4/5/6/1/2/3 changes to 9/10/11/12/13/14/7/8/4/5/3/2/1/6 (or the time sequence corresponding relationship does not change, but the number of online operations of the ONUs going offline in the previous period increases).

It can be seen that ONU 9 corresponds to the head critical slot within a range for the time sequence being shifted forward, the ONU 9 is shifted to the head of the queue after multiple periods, and the ONU time sequence relationships after the ONU 9 change or offline operations occur, so that it is determined to be backward interference (the interference source is in the middle of the queue), and the corresponding ONU 9 is a critical suspicious ONU. According to a certain strategy, related ONUs (such as ONUs 9/10/11) are set as suspicious ONUs. The weight of the critical ONU is set to be the largest weight (such as priority 3), and weights (such as weight 2 for ONU 10 and weight 1 for ONU 11) are respectively set for other suspicious ONUs according to a certain strategy (such as that the weight is inversely proportional to the distance between the corresponding slot and the critical slot).

In step S414, if it is detected that the a single or multiple ONU slot relationships at the tail of the authorized slot sequence have changed in multiple DBA allocation periods, or the offline operations of ONUs of a single or multiple slots at the tail of the authorized slot sequence occur in multiple DBA allocation periods, other ONU slot relationships remain stable, one or more slots before multiple slots whose ONUs go offline at the head of the authorized slot sequence in the DBA allocation period may be determined as suspicious slots; and ONUs (determined according to the ONU configuration index or the ONU registration authentication identifier) corresponding to the suspicious slots are determined to be suspicious ONUs.

Further, specific examples are as shown in FIG. 10. FIG. 10 is a diagram showing slot corresponding relationships in multiple DBA periods when forward interference (an interference source is at the head of a queue) occurs. The forward interference refers to a case that the interference source is at the head of the queue, and the interference source slot is relatively fixed. In period 1, an initial time sequence corresponding relationship is 1/2/3/4/5/6/7/8/9/10/11/12/13/14; ONUs 12/13/14 at the tail of the queue are interfered and go offline, and go online again in the next period.

In period 2, the time sequence corresponding relationship changes relative to the previous period (or the time sequence corresponding relationship does not change, but the number of online operations of the ONUs going offline in the previous period increases), and ONUs 12/13/14 going offline in the previous period go online at the tail of the queue. For example, the time sequence corresponding relationship of 1/2/3/4/5/6/7/8/9/10/11/12/13/14 changes to 1/2/3/4/5/6/7/8/9/10/11/14/13/12; and ONUs 14/13/12 are interfered and go offline, and go online again in the next period.

In period 3, the time sequence corresponding relationship changes relative to the previous period (or the time sequence corresponding relationship does not change, but the number of online operations of the ONUs going offline in the previous period increases), and ONUs 14/13/12 going offline in the previous period go online at the tail of the queue. For example, the time sequence corresponding relationship of 1/2/3/4/5/6/7/8/9/10/11/14/13/12 changes to 1/2/3/4/5/6/7/8/9/10/11/14/13/12; and ONUs 14/13/12 are interfered and go offline, and go online again in the next period.

In period 4, the time sequence corresponding relationship changes relative to the previous period (or the time sequence corresponding relationship does not change, but the number of online operations of the ONUs going offline in the previous period increases), and ONUs 14/13/12 going offline in the previous period go online at the tail of the queue. For example, the time sequence corresponding relationship of 1/2/3/4/5/6/7/8/9/10/11/14/13/12 changes to 1/2/3/4/5/6/7/8/9/10/11/14/13/12; and ONUs 11/14/13/12 are interfered and go offline, and go online again in the next period.

In period 5, the time sequence corresponding relationship changes relative to the previous period (or the time sequence corresponding relationship does not change, but the number of online operations of the ONUs going offline in the previous period increases), and ONUs 11/14/13/12 going offline in the previous period go online at the tail of the queue. For example, the time sequence corresponding relationship of 1/2/3/4/5/6/7/8/9/10/11/14/13/12 changes to 1/2/3/4/5/6/7/8/9/10/12/13/14/11.

It can be seen that a change of the slot corresponding relationship or a change of the number of online and offline operations occurs on a part of ONUs at the tail of the queue, so that it is determined to be backward interference (the interference source is at the head of the queue), and the corresponding ONU 1 is a critical suspicious ONU. According to a certain strategy, related ONUs (such as ONUs 1/2/3) are set as suspicious ONUs. The weight of the critical ONU is set to be the largest weight (such as priority 3), and weights (such as weight 2 for ONU 2 and weight 1 for ONU 3) are respectively set for other suspicious ONUs according to a certain strategy (such as that the weight is inversely proportional to the distance between the corresponding slot and the critical slot).

In step S420, in response to the PON port adopts a static slot configuration mechanism (that is, every time an ONU goes offline and then goes online, the PON port uses an original ONU registration authentication identifier), the counting on the number of online and offline operations of corresponding ONUs is detected and updated.

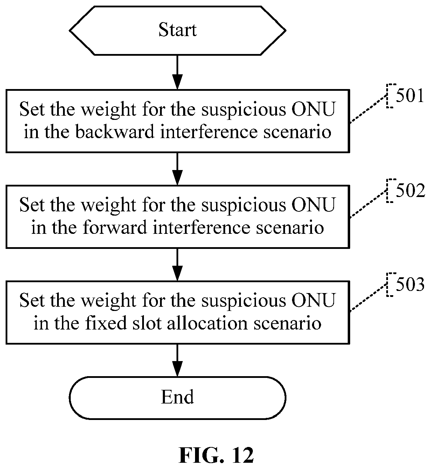

The ONU with abnormal number of offline operations in the detection period is identified according to a certain strategy. The strategy may include: the offline operations of the PON port being the most or the least, and the statistical distribution of the number of ONU offline operations under the PON port being the most discrete (that is, the difference between the statistical distribution of the number of ONU offline operations and the average of the numbers of offline operations is greater than a certain threshold 1, and the threshold 1 may be manually set). Or, the difference between the number of offline operations of specific ONUs under the PON port and the average of the numbers of offline operations being greater than a certain threshold 2 (the threshold 2 may be manually set), these specific ONUs are determined as suspicious ONUs, and ONUs covered by multiple discretely distributed suspicious ONUs on the slots are all determined as suspicious ONUs (for example: if an ONU ID is the same as a registration allocation slot number, that is, ONUs 2/3/4/5 are continuous on the slot, and if ONU 2 and ONU 5 are determined as suspicious ONUs, ONU 2, ONU 3, ONU 4 and ONU 5 are all determined as suspicious ONU). FIG. 12 is a flowchart of setting weights for suspicious ONUs according to an example of the present invention. As shown in FIG. 12, suspicious ONU information is recorded and the suspicious ONU record table (the content includes but is not limited to: an ONU configuration index, an ONU registration authentication identifier, an ONU feature value, and a weight) is updated. Weights in a suspicious ONU list are set according to a certain strategy, and the strategy includes but is not limited to: time sequence, the number of offline operations, etc. The steps described below are included. In step S501, for the backward interference scenario of the dynamic slot allocation described in step S411/412, a highest weight is set for the backmost slot of the determined suspicious ONUs, and weights of other suspicious ONUs sequentially decrease according to a slot forward order. In step S502, for the forward interference scenario of the dynamic slot allocation described in step S413/414, a highest weight is set for the foremost slot of the determined suspicious ONUs, and weights of other suspicious ONUs sequentially decrease according to a slot backward order. In step S503, for the scenario of the fixed slot allocation in step S420, a highest weight is set for the suspicious ONU with the largest or smallest number of offline operations, and weights of other suspicious ONUs sequentially decrease according to the order of numbers of offline operations or the time sequence relationship.

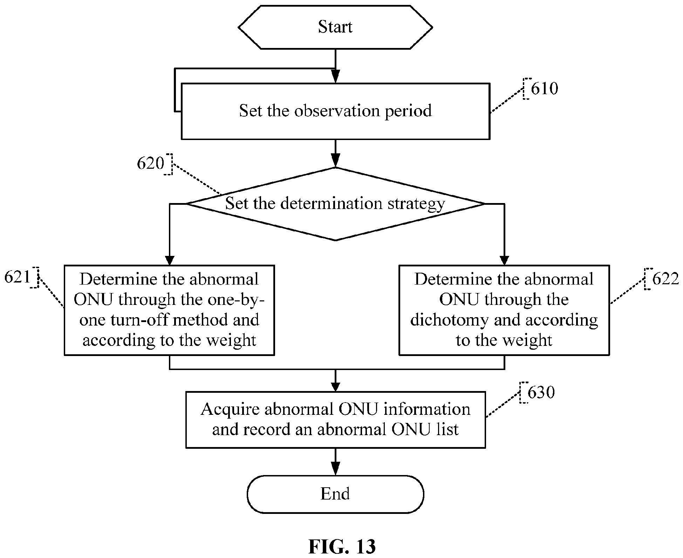

FIG. 13 is a flowchart of determining abnormal ONUs according to an example of the present invention. As shown in FIG. 13, according to the suspicious ONU list, the power supply of an ONU optical transmitter is remotely turned off/turned on to confirm that one or more ONUs among the determined suspicious ONUs are trouble interference ONUs, and the abnormal interference ONU record table is recorded and updated. The method includes but is not limited to a turn-off method. The turn-off method may be used to eliminate interference by methods such as remotely turning off the power supply of a specific ONU optical transmitter. After the specific ONU is turned off, whether the trouble exists (that is, whether the triggering condition is satisfied) is detected in an observation period. If the trouble does not exist, the ONU is the trouble interference ONU; otherwise, the next or next batch of ONUs are turned off according to an algorithm until all ONUs are traversed. Specifically, the steps described below are included. In step S610, the observation period is set (the method for setting the observation period includes but is not limited to: manually setting, or automatic calculating according to a trouble occurrence period time calculated according to a statistical table of the number of online and offline operations of the ONU under the PON port multiplied by a coefficient, or directly acquiring the value of m), and whether the trouble occurs is determined in the observation period according to a trouble triggering condition set in the second step.

In step S620, the ONU may be remotely turned off according to a certain algorithm. When multiple suspicious ONUs exist, algorithms such as one-by-one turn-off method or a dichotomy may be used to confirm the turn-off. The method includes but is not limited to the steps described below. In step S621, suspicious ONUs are turned off one by one according to a certain method; if one ONU is turned off and then the trouble occurs (the triggering condition is satisfied) in a detection period, the next ONU is turned off; if one certain ONU is turned off and then the trouble no longer occurs in the observation period (the triggering condition is not satisfied), the ONU is considered to be an abnormal interference ONU; and the one-by-one turn-off method includes but is not limited to: turning off one by one according to weights of suspicious ONUs, and turning off one by one according to other strategies. In step S622, when a dichotomy is adopted to turn off suspicious ONUs, ONUs may be divided according to rules (such as an ONU type/version, the number of online and offline operations, a weight, etc.), the observation period may be set (the observation period may be manually set or be automatically calculated according to the trouble occurrence period time calculated according to a statistical table of the number of online and offline operations of the ONU under the PON port multiplied by a coefficient), and batches of ONUs are turned off according to the dichotomy and whether the trouble occurs in the observation period (whether the triggering condition is satisfied) is observed; if a certain batch of ONUs are turned off and then the trouble still occurs, remaining ONUs under the PON port are continuously turned off; if a certain batch of ONUs are turned off and then the trouble disappears, this batch of ONUs are turned on and are continuously processed by the dichotomy until a certain ONU is turned off and then the trouble no longer occurs in the observation period (the triggering condition is not satisfied), and the certain ONU is considered to be an abnormal interference ONU. In step S630, abnormal interference ONU information is acquired, and the abnormal interference ONU record table is recorded and updated.

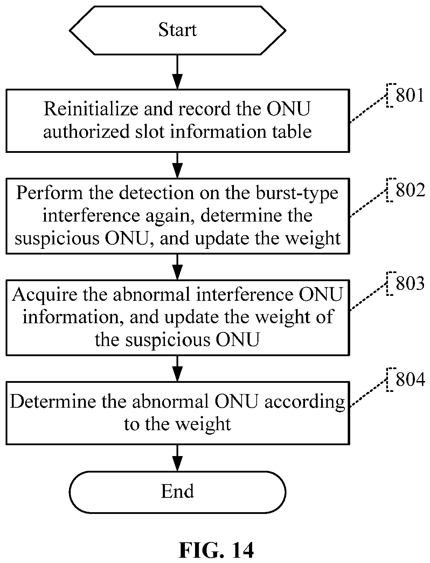

FIG. 14 is a determination flowchart of updating weights and automatic learning for re-detection according to an example of the present invention. As shown in FIG. 14, the feature value (model/version) of the abnormal interference ONU is recorded. When the triggering condition for the detection is satisfied in the next round, a new suspicious ONU record table is updated, weights of related ONUs in the suspicious ONU record table are updated according to a matching situation of ONU features, and the sixth step is performed for positioning. Specifically, the steps described below are included. In step S801, the ONU authorized slot information table is reinitialized and recorded. In step S802, suspicious ONUs are determined when a burst-type interference detection is performed again according to the triggering condition. Comparison with the ONU information in the suspicious ONU record table is performed, and a historical suspicious trouble ONU record table is updated. If a suspicious ONU is not in the record table, the suspicious ONU is added to the table; if the suspicious ONU is already in the record table, the weight of the suspicious ONU is increased by one. In step S803, a network element acquires the abnormal interference ONU information record table from a network manager or queries the local abnormal interference ONU information record table. The suspicious ONU information record table is compared with the abnormal interference ONU record table. If the ONU feature information is consistent, the weight of the corresponding ONU in the suspicious ONU information record table is increased by one.

In step S804, a system performs the sixth step according to the weight information of recorded suspicious ONUs and performs turn-off and confirmation operations on ONUs with high weights. According to the solutions provided by the embodiments of the present invention, the ONU information processed and recorded for multiple times is learned, so that the accuracy of determining suspicious ONUs is improved. Therefore, the positioning confirmation solution is simpler and more flexible, and the cost is also relatively low.

According to the solutions provided by the embodiments of the present invention, under the existing art system, the OLT can directly detect the change of the corresponding relationship between the registration authorized slot and the ONU information, determine the possible interfered slot by burst-type interference, or find out the corresponding ONU according to the statistical difference between numbers of ONU offline operations, and set and update interference weights of suspicious ONUs in multiple rounds of detection. Therefore, the range for determining abnormal ONUs is narrowed, and the efficiency and accuracy of determination are improved.

## Claims

1. A method for positioning an optical network unit, ONU, with burst-type abnormal luminescence interference, comprising:
performing monitoring in real time, by an optical line terminal, OLT, of a passive optical network, xPON, on an ONU authorized slot variation or a number of ONU online and offline operations under each PON port, and acquiring a plurality of suspicious ONUs with burst-type abnormal luminescence interference under the each PON port, wherein the number of ONU offline operations refers to a number of times that an ONU which works by using an authorized slot allocated by the OLT is offline due to an interference, the interference is caused by an ONU under a same PON port which turns on the laser or sends data in an unauthorized slot without control of the OLT; and the number of ONU online operations refers to a number of times to go online again after the ONU which works by using the authorized slot allocated by the OLT goes offline due to the interference; and
performing troubleshooting, by the xPON OLT, on the plurality of suspicious ONUs to obtain interference ONUs with burst-type abnormal luminescence interference under the each PON port; **characterized in that**
the performing troubleshooting, by the xPON OLT, on the plurality of suspicious ONUs to obtain interference ONUs with burst-type abnormal luminescence interference under the each PON port comprises:
respectively setting interference weights, by the xPON OLT, for the plurality of suspicious ONUs in each detection period to obtain an interference weight value of each of the plurality of suspicious ONUs; and
sequentially performing troubleshooting, by the xPON OLT, on the plurality of suspicious ONUs according to a size order of interference weight values to obtain the interference ONUs with burst-type abnormal luminescence interference under the each PON port;
wherein the performing monitoring in real time, by the xPON OLT, on the ONU authorized slot variation, and acquiring the plurality of suspicious ONUs with burst-type abnormal luminescence interference under the each PON port comprises:
finding out, by the xPON OLT according to a change of a corresponding relationship between an ONU registration authentication identifier and an ONU authorized slot consecutively occurring in a plurality of dynamic bandwidth allocation, DBA, periods of the each PON port, a plurality of slots adjacent to a variation range of a plurality of ONU slots in time sequence and ONUs corresponding to the plurality of slots, configuring the plurality of slots as a plurality of suspicious slots, and configuring the ONUs corresponding to the plurality of suspicious slots as the plurality of suspicious ONUs with burst-type abnormal luminescence interference; and
wherein the performing monitoring in real time, by the xPON OLT, on the number of the ONU online and offline operations, and acquiring the plurality of suspicious ONUs with burst-type abnormal luminescence interference under the each PON port comprises:
performing counting, by the xPON OLT, on the number of the ONU online and offline operations during a set period of the each PON port to find out a plurality of abnormal ONUs whose number of the ONU online and offline operations is not within a preset range of numbers of the ONU online and offline operations, and configuring the plurality of abnormal ONUs as the plurality of suspicious ONUs with burst-type abnormal luminescence interference.

2. The method according to claim 1, wherein the performing monitoring in real time, by the xPON OLT, on the ONU authorized slot variation or the number of the ONU online and offline operations under the each PON port, and acquiring the plurality of suspicious ONUs with burst-type abnormal luminescence interference under the each PON port comprises:
performing inspection, by the xPON OLT, on a slot configuration mechanism of uplink bandwidth of the each PON port, and determining whether the slot configuration mechanism of the uplink bandwidth of the each PON port is a dynamic slot configuration mechanism or a static slot configuration mechanism;
in response to the slot configuration mechanism of the uplink bandwidth of the each PON port being determined to be the dynamic slot configuration mechanism, performing monitoring in real time, by the xPON OLT, on the ONU authorized slot variation, and determining the plurality of suspicious ONUs with burst-type abnormal luminescence interference under the each PON port;
in response to the slot configuration mechanism of the uplink bandwidth of the PON port being determined to be the static slot configuration mechanism, performing monitoring in real time, by the xPON OLT, on the number of the ONU online and offline operations, and determining the plurality of suspicious ONUs with burst-type abnormal luminescence interference under the each PON port.

3. The method according to claim 2, wherein in response to the slot configuration mechanism of the uplink bandwidth of the each PON port being the dynamic slot configuration mechanism, the burst-type abnormal luminescence interference comprises forward burst-type abnormal luminescence interference and backward burst-type abnormal luminescence interference; and respectively setting the interference weights, by the xPON OLT, for the plurality of suspicious ONUs in the each detection period to obtain the interference weight value of the each of the plurality of suspicious ONUs comprises:
in response to the burst-type abnormal luminescence interference being the forward burst-type abnormal luminescence interference, setting, by the xPON OLT, a highest interference weight for an ONU corresponding to a foremost slot of the plurality of suspicious ONUs in the each detection period, wherein interference weights of other suspicious ONUs sequentially decrease according to a slot backward order;
in response to the burst-type abnormal luminescence interference being the backward burst-type abnormal luminescence interference, setting, by the xPON OLT, a highest interference weight for an ONU corresponding to a backmost slot of the plurality of suspicious ONUs in the each detection period, wherein interference weights of other suspicious ONUs sequentially decrease according to a slot forward order.

4. The method according to claim 1, wherein the performing counting, by the xPON OLT, on the number of the ONU online and offline operations during the set period of the each PON port to find out the plurality of abnormal ONUs whose number of the ONU online and offline operations is not within the preset range of the numbers of the ONU online and offline operations comprises:
counting and recording, by the xPON OLT according to an absolute time, a first set of the numbers of the ONU online and offline operations of the each PON port during the set period, or counting and recording, according to a relative time, a second set of the numbers of the ONU online and offline operations of the PON port during the set period taking a current time as a reference; and
respectively comparing, by the xPON OLT, each number in the first set of the numbers of the ONU online and offline operations or each number in the second set of the numbers of the ONU online and offline operations with the preset range of the numbers of the ONU online and offline operations to acquire the plurality of abnormal ONUs; wherein
the preset range comprises a range of the numbers of ONU offline operations under a PON port, a statistical distribution discrete range of numbers of the ONU offline operations under the PON port, and a difference range between a specific number of the ONU offline operations and an average of the numbers of the ONU offline operations under the PON port.

5. An apparatus for positioning an optical network unit, ONU, with burst-type abnormal luminescence interference, comprising:
a monitoring module, which is configured to: perform monitoring in real time on an ONU authorized slot variation or a number of ONU online and offline operations under each passive optical network, PON, port, and acquire a plurality of suspicious ONUs with burst-type abnormal luminescence interference under the each PON port, wherein the number of ONU offline operations refers to a number of times that an ONU which works by using an authorized slot allocated by the OLT is offline due to an interference, the interference is caused by an ONU under a same PON port which turns on the laser or sends data in an unauthorized slot without control of the OLT; and the number of ONU online operations refers to a number of times to go online again after the ONU which works by using the authorized slot allocated by the OLT goes offline due to the interference; and
a positioning module, which is configured to perform troubleshooting on the plurality of suspicious ONUs to obtain interference ONUs with burst-type abnormal luminescence interference under the each PON port, **characterized in that** the positioning module is configured to:
set respectively interference weights for the plurality of suspicious ONUs in each detection period to obtain an interference weight value of each of the plurality of suspicious ONUs; and
perform sequentially troubleshooting on the plurality of suspicious ONUs according to a size order of interference weight values to obtain the interference ONUs with burst-type abnormal luminescence interference under the each PON port;
wherein the monitoring module is configured to:
find out, according to a change of a corresponding relationship between an ONU registration authentication identifier and an ONU authorized slot consecutively occurring in a plurality of dynamic bandwidth allocation, DBA, periods of the each PON port, a plurality of slots adjacent to a variation range of a plurality of ONU slots in time sequence and ONUs corresponding to the plurality of slots, configure the plurality of slots as a plurality of suspicious slots, and configure the ONUs corresponding to the plurality of suspicious slots as the plurality of suspicious ONUs with burst-type abnormal luminescence interference; and
wherein the monitoring module is configured to:
perform counting on the number of the ONU online and offline operations during a set period of the each PON port to find out a plurality of abnormal ONUs whose number of the ONU online and offline operations is not within a preset range of numbers of the ONU online and offline operations, and configure the plurality of abnormal ONUs as the plurality of suspicious ONUs with burst-type abnormal luminescence interference.

6. A device for positioning an optical network unit, ONU, with burst-type abnormal luminescence interference, comprising: a processor, and a memory coupled to the processor; wherein the memory stores thereon a program for positioning an ONU with burst-type abnormal luminescence interference operable on the processor, and the program for positioning an ONU with burst-type abnormal luminescence interference, when executed by the processor, implements steps of the method for positioning an ONU with burst-type abnormal luminescence interference of any one of claims 1 to 4.

7. A computer storage medium, storing a program for positioning an optical network unit, ONU, with burst-type abnormal luminescence interference, wherein the program for positioning an ONU with burst-type abnormal luminescence interference, when executed by a processor, implements steps of the method for positioning an ONU with burst-type abnormal luminescence interference of any one of claims 1 to 4.

## Patentansprüche

1. Verfahren zur Positionierung einer optischen Netzwerkeinheit, ONU, mit abnormalen Lumineszenzstörungen vom Burst-Typ, welches umfasst:
ein Durchführen einer Überwachung in Echtzeit durch ein Endgerät einer optischen Leitung, OLT, eines passiven optischen Netzwerks, xPON, an einer Variation an autorisierten ONU-Schlitzen oder einer Anzahl an ONU-Online- und - Offline-Vorgängen unter jedem PON-Port, und ein Erfassen einer Vielzahl an verdächtigen ONUs mit abnormalen Lumineszenzstörungen vom Burst-Typ unter jedem PON-Port, wobei sich die Anzahl der ONU-Offline-Vorgänge auf eine Anzahl von Malen bezieht, die eine ONU, die unter Verwendung eines durch dem OLT zugewiesenen autorisierten Schlitzes arbeitet, aufgrund einer Störung offline ist, wobei die Störung durch eine ONU unter demselben PON-Port verursacht wird, die den Laser einschaltet oder Daten in einem nicht autorisierten Schlitz ohne Kontrolle des OLT sendet, und wobei die Anzahl der ONU-Online-Vorgänge sich auf eine Anzahl von Malen bezieht, um wieder online zu gehen, nachdem die ONU, die unter Verwendung des von dem OLT zugewiesenen autorisierten Schlitzes arbeitet, aufgrund der Störung offline gegangen ist, und
ein Durchführen einer Fehlersuche an der Vielzahl der verdächtigen ONUs durch das xPON-OLT, um gestörte ONUs mit anormalen Lumineszenzstörungen vom Burst-Typ unter jedem PON-Port zu erhalten, **dadurch gekennzeichnet, dass**
das Durchführen der Fehlersuche an der Vielzahl der verdächtigen ONUs durch das xPON-OLT, um gestörte ONUs mit anormalen Lumineszenzstörungen vom Burst-Typ unter jedem PON-Port zu erhalten, umfasst:
ein jeweiliges Setzen von Interferenzgewichtungen durch das xPON-OLT für die Vielzahl der verdächtigen ONUs in jeder Erfassungsperiode, um einen Interferenzgewichtungswert für jedes von der Vielzahl der verdächtigen ONUs zu erhalten, und
ein sequentielles Durchführen einer Fehlersuche durch das xPON-OLT an der Vielzahl der verdächtigen ONUs gemäß einer Größenordnung der Interferenzgewichtungswerte, um die gestörte ONUs mit abnormaler Lumineszenzstörung vom Burst-Typ unter jedem PON-Port zu erhalten,
wobei das Durchführen der Überwachung in Echtzeit durch das xPON-OLT auf der Variation der autorisierten ONU-Schlitze und das Erfassen der Vielzahl der verdächtigen ONUs mit abnormaler Lumineszenzstörung vom Burst-Typ unter jedem PON-Port umfasst:
ein Ermitteln durch das xPON-OLT gemäß einer Änderung einer entsprechenden Beziehung zwischen einer Kennung einer ONU-Registrierungsauthentifizierung und einem ONU-autorisierten Schlitz, die nacheinander in einer Vielzahl an Perioden der dynamischen Bandbreitenzuweisung, DBA, des jeweiligen PON-Ports auftreten, eine Vielzahl an Schlitzen, die an einen Variationsbereich einer Vielzahl an ONU-Schlitzen in zeitlicher Abfolge angrenzen, und ONUs, die der Vielzahl der Schlitzen entsprechen, ein Konfigurieren der Vielzahl der Schlitze als eine Vielzahl von verdächtigen Schlitzen, und ein Konfigurieren der ONUs, die der Vielzahl von verdächtigen Schlitzen entsprechen, als die Vielzahl von verdächtigen ONUs mit abnormalen Lumineszenzstörungen vom Burst-Typ, und
wobei das Durchführen der Überwachung der Anzahl der ONU-Online- und - Offline-Vorgänge in Echtzeit durch das xPON-OLT und das Erfassen der Vielzahl der verdächtigen ONUs mit abnormaler Lumineszenzstörung vom Burst-Typ unter jedem PON-Port umfasst:
ein Durchführen einer Zählung an der Anzahl der ONU-Online- und -Offline-Vorgänge während einer eingestellten Periode des jeweiligen PON-Ports durch das xPON-OLT, um eine Vielzahl von abnormalen ONUs herauszufinden, deren Anzahl der ONU-Online- und -Offline-Vorgänge nicht innerhalb eines voreingestellten Bereichs von Anzahlen der ONU-Online- und -Offline-Vorgänge liegt, und ein Konfigurieren der Vielzahl der abnormalen ONUs als die Vielzahl der verdächtigen ONUs mit abnormalen Lumineszenzstörungen vom Burst-Typ.

2. Verfahren nach Anspruch 1, wobei das Durchführen der Überwachung in Echtzeit durch das xPON-OLT bezüglich der Variation der autorisierten ONU-Schlitze oder der Anzahl der ONU-Online- und -Offline-Vorgänge unter jedem PON-Port und das Erfassen der Vielzahl der verdächtigen ONUs mit abnormalen Lumineszenzstörungen vom Burst-Typ unter jedem PON-Port umfasst:
ein Durchführen einer Inspektion eines Schlitzkonfigurationsmechanismus der Uplink-Bandbreite jedes PON-Ports durch das xPON-OLT, und ein Bestimmen, ob der Schlitzkonfigurationsmechanismus der Uplink-Bandbreite jedes PON-Ports ein dynamischer Schlitzkonfigurationsmechanismus oder ein statischer Schlitzkonfigurationsmechanismus ist,
ein Durchführen einer Überwachung der Variation der autorisierten ONU-Schlitze in Echtzeit durch das xPON-OLT und ein Bestimmen der Vielzahl der verdächtigen ONUs mit abnormalen Lumineszenzstörungen vom Burst-Typ unter jedem PON-Port als Reaktion darauf, dass der Schlitzkonfigurationsmechanismus der Uplink-Bandbreite jedes PON-Ports als ein dynamischer Schlitzkonfigurationsmechanismus bestimmt worden ist,
ein Durchführen einer Überwachung in Echtzeit durch das xPON-OLT bezüglich der Anzahl der ONU-Online- und -Offline-Vorgänge und ein Bestimmen der Vielzahl der verdächtigen ONUs mit abnormalen Lumineszenzstörungen vom Burst-Typ unter jedem PON-Port als Reaktion darauf, dass der Schlitzkonfigurationsmechanismus der Uplink-Bandbreite des PON-Ports als ein statischer Schlitzkonfigurationsmechanismus bestimmt worden ist.

3. Verfahren nach Anspruch 2, wobei als Reaktion darauf, dass der Schlitzkonfigurationsmechanismus der Aufwärtsbandbreite jedes PON-Ports der dynamische Schlitzkonfigurationsmechanismus ist, die abnormale Lumineszenzstörung vom Burst-Typ eine vorwärts gerichtete abnormale Lumineszenzstörung vom Burst-Typ und eine rückwärts gerichtete abnormale Lumineszenzstörung vom Burst-Typ umfasst, und wobei das jeweilige Einstellen der Interferenzgewichtungen durch das xPON-OLT für die Vielzahl der verdächtigen ONUs in jeder Erfassungsperiode, um den Interferenzgewichtungswert jeder von der Vielzahl der verdächtigen ONUs zu erhalten, umfasst:
als Reaktion darauf, dass die abnormale Lumineszenzstörung vom Burst-Typ die vorwärts gerichtete abnormale Lumineszenzstörung vom Burst-Typ ist, ein Einstellen einer höchsten Interferenzgewichtung für ein ONU, die einem vordersten Schlitz von der Vielzahl der verdächtigen ONUs in jeder Erfassungsperiode entspricht, durch das xPON-OLT, wobei die Interferenzgewichtungen anderer verdächtiger ONUs gemäß einer rückwärts gerichteten Schlitzreihenfolge sequentiell abnehmen,
als Reaktion darauf, dass die abnormale Lumineszenzstörung vom Burst-Typ die rückwärts gerichtete abnormale Lumineszenzstörung vom Burst-Typ ist, ein Einstellen durch das xPON-OLT einer höchsten Interferenzgewichtung für ein ONU, die einem hintersten Schlitz von der Vielzahl der verdächtigen ONUs in jeder Erfassungsperiode entspricht, wobei die Interferenzgewichtungen anderer verdächtiger ONUs gemäß einer vorwärts gerichteten Schlitzreihenfolge sequentiell abnehmen.

4. Verfahren nach Anspruch 1, wobei das Durchführen des Zählens der Anzahl der ONU-Online- und -Offline-Vorgänge während der eingestellten Periode jedes PON- Ports durch das xPON-OLT, um die Vielzahl der abnormalen ONUs herauszufinden, deren Anzahl der ONU-Online- und Offline-Vorgänge nicht innerhalb des voreingestellten Bereichs der Anzahl der ONU-Online- und -Offline-Vorgänge liegt, umfasst:
ein Zählen und ein Aufzeichnen durch das xPON-OLT gemäß einer absoluten Zeit von einem ersten Satz der Anzahl der ONU-Online- und -Offline-Vorgänge jedes PON-Ports während des festgelegten Zeitraums, oder ein Zählen und ein Aufzeichnen gemäß einer relativen Zeit von einem zweiten Satz der Anzahl der ONU-Online- und -Offline-Vorgänge des PON-Ports während des festgelegten Zeitraums, wobei eine aktuelle Zeit als eine Referenz genommen wird, und
ein jeweiliges Vergleichen durch das xPON-OLT von jeder Zahl in dem ersten Satz der Zahlen der ONU-Online- und -Offline-Vorgänge oder von jeder Zahl in dem zweiten Satz der Zahlen der ONU-Online- und -Offline-Vorgänge mit dem voreingestellten Bereich der Zahlen der ONU-Online- und -Offline-Vorgänge, um die Vielzahl der anormalen ONUs zu erfassen, wobei
der voreingestellte Bereich einen Bereich der Anzahl der ONU-Offline-Vorgänge unter einem PON-Port, einen diskreten Bereich der statistischen Verteilung der Anzahl der ONU-Offline-Vorgänge unter dem PON-Port und einen Differenzbereich zwischen einer spezifischen Anzahl der ONU-Offline-Vorgänge und einem Durchschnitt der Anzahl der ONU-Offline-Vorgänge unter dem PON-Port aufweist.

5. Vorrichtung zur Positionierung einer optischen Netzwerkeinheit, ONU, mit einer abnormalen Lumineszenzstörung vom Burst-Typ, welche aufweist:
ein Überwachungsmodul, das ausgestaltet ist, um eine Überwachung einer Variation an autorisierten ONU-Schlitzen oder einer Anzahl von ONU-Online- und - Offline-Vorgänge unter jedem passiven optischen Netzwerkport, PON-Port, in Echtzeit durchzuführen und um eine Vielzahl an verdächtigen ONUs mit abnormalen Lumineszenzstörungen vom Burst-Typ unter jedem PON-Port zu erfassen, wobei sich die Anzahl der ONU-Offline-Vorgänge auf eine Anzahl von Malen bezieht, bei denen eine ONU, die unter Verwendung eines durch den OLT zugewiesenen autorisierten Schlitzes arbeitet, aufgrund einer Störung offline ist, wobei die Störung durch eine ONU unter einem gleichen PON-Port verursacht wird, die den Laser einschaltet oder Daten in einem nicht autorisierten Schlitz ohne Kontrolle des OLT sendet, und wobei die Anzahl der ONU-Online-Vorgänge sich auf eine Anzahl an Malen bezieht, um wieder online zu gehen, nachdem die ONU, die unter Verwendung des von dem OLT zugewiesenen autorisierten Schlitzes arbeitet, aufgrund der Störung offline gegangen ist, und
ein Positionierungsmodul, das ausgestaltet ist, um eine Fehlersuche an der Vielzahl der verdächtigen ONUs durchzuführen, um die gestörten ONUs mit einer anormalen Lumineszenzstörung vom Burst-Typ unter jedem PON-Port zu erhalten, **dadurch gekennzeichnet, dass** das Positionierungsmodul ausgestaltet ist, um
jeweils Interferenzgewichtungen für die Vielzahl der verdächtigen ONUs in jeder Erfassungsperiode einzustellen, um einen Interferenzgewichtungswert für jedes von der Vielzahl der verdächtigen ONUs zu erhalten, und
eine sequentielle Fehlersuche an der Vielzahl der verdächtigen ONUs gemäß einer Größenordnung von Interferenzgewichtungswerten durchzuführen, um die gestörten ONUs mit abnormalen Lumineszenzstörungen vom Burst-Typ unter jedem PON-Port zu erhalten,
wobei das Überwachungsmodul ausgestaltet ist, um
gemäß einer Änderung einer entsprechenden Beziehung zwischen einer Kennung einer ONU-Registrierungsauthentifizierung und einem ONU-autorisierten Schlitz, die nacheinander in einer Vielzahl von Perioden der dynamischen Bandbreitenzuweisung, DBA, des jeweiligen PON-Ports auftreten, eine Vielzahl an Schlitzen, die an einen Variationsbereich einer Vielzahl an ONU-Schlitzen in zeitlicher Abfolge angrenzen, und ONUs, die der Vielzahl der Schlitze entsprechen, herauszufinden, und um die Vielzahl der Schlitze als eine Vielzahl an verdächtigen Schlitzen zu konfigurieren, und um die ONUs, die der Vielzahl der verdächtigen Schlitze entsprechen, als die Vielzahl der verdächtigen ONUs mit anormalen Lumineszenzstörungen vom Burst-Typ zu konfigurieren, und
wobei das Überwachungsmodul ausgestaltet ist, um
die Anzahl der ONU-Online- und -Offline-Vorgänge während einer eingestellten Periode jedes PON-Ports zu zählen, um eine Vielzahl an abnormalen ONUs herauszufinden, deren Anzahl der ONU-Online- und -Offline-Vorgänge nicht innerhalb eines voreingestellten Bereichs von Anzahlen der ONU-Online- und -Offline-Vorgänge liegt, und um die Vielzahl von abnormalen ONUs als die Vielzahl der verdächtigen ONUs mit abnormaler Lumineszenzstörung vom Burst-Typ zu konfigurieren.

6. Vorrichtung zum Positionieren einer optischen Netzwerkeinheit, ONU, mit anormaler Lumineszenzstörung vom Burst-Typ, welche einen Prozessor und einen mit dem Prozessor verbundenen Speicher aufweist, wobei der Speicher ein Programm zum Positionieren eines ONU mit anormaler Lumineszenzstörung vom Burst-Typ speichert, das auf dem Prozessor betrieben werden kann, und wobei das Programm zum Positionieren eines ONU mit anormaler Lumineszenzstörung vom Burst-Typ, wenn es durch den Prozessor ausgeführt wird, Schritte des Verfahrens zum Positionieren eines ONU mit anormaler Lumineszenzstörung vom Burst-Typ nach einem der Ansprüche 1 bis 4 implementiert.

7. Computerspeichermedium, das ein Programm zum Positionieren einer optischen Netzwerkeinheit, ONU, mit anormaler Lumineszenzstörung vom Burst-Typ speichert, wobei das Programm zum Positionieren eines ONU mit anormaler Lumineszenzstörung vom Burst-Typ, wenn es von einem Prozessor ausgeführt wird, Schritte des Verfahrens zum Positionieren eines ONU mit anormaler Lumineszenzstörung vom Burst-Typ nach einem der Ansprüche 1 bis 4 implementiert.

## Revendications

1. Procédé de positionnement d'une unité de réseau optique, ONU, avec une interférence de luminescence anormale de type rafale, comprenant :
la réalisation d'une surveillance en temps réel, par un terminal de ligne optique, OLT, d'un réseau optique passif, xPON, d'une variation d'intervalle autorisé d'ONU ou d'un nombre d'opérations en ligne et hors ligne d'ONU au niveau de chaque port PON, et l'acquisition d'une pluralité d'ONU suspectes avec une interférence de luminescence anormale de type rafale au niveau de chaque port PON, dans lequel le nombre d'opérations hors ligne d'ONU se réfère à un nombre de fois qu'une ONU qui fonctionne en utilisant un intervalle autorisé attribué par l'OLT est hors ligne en raison d'une interférence, dans lequel l'interférence est provoquée par une ONU au niveau d'un même port PON qui active le laser ou envoie des données dans un intervalle non autorisé sans commande de l'OLT ; et dans lequel le nombre d'opérations en ligne d'ONU se réfère à un nombre de fois de remise en ligne après que l'ONU qui fonctionne en utilisant l'intervalle autorisé attribué par l'OLT est hors ligne en raison de l'interférence ; et
la réalisation d'un dépannage, par l'OLT de xPON, de la pluralité d'ONU suspectes pour obtenir des ONU à interférence avec une interférence de luminescence anormale de type rafale au niveau de chaque port PON ; **caractérisé en ce que**
la réalisation d'un dépannage, par l'OLT de xPON, de la pluralité d'ONU suspectes pour obtenir des ONU à interférence avec une interférence de luminescence anormale de type rafale au niveau de chaque port PON comprend :
la définition de poids d'interférence respectifs, par l'OLT de xPON, pour la pluralité d'ONU suspectes dans chaque période de détection pour obtenir une valeur de poids d'interférence de chaque ONU suspecte de la pluralité d'ONU suspectes ; et
la réalisation, séquentiellement, d'un dépannage, par l'OLT de xPON, de la pluralité d'ONU suspectes selon un ordre de taille de valeurs de poids d'interférence pour obtenir les ONU à interférence avec une interférence de luminescence anormale de type rafale au niveau de chaque port PON ;
dans lequel la réalisation d'une surveillance en temps réel, par l'OLT de xPON, de la variation d'intervalle autorisé d'ONU, et l'acquisition de la pluralité d'ONU suspectes avec une interférence de luminescence anormale de type rafale au niveau de chaque port PON comprennent :
la recherche, par l'OLT de xPON, en fonction d'un changement d'une relation correspondante entre un identifiant d'authentification d'enregistrement d'ONU et un intervalle autorisé d'ONU se produisant consécutivement dans une pluralité de périodes d'assignation dynamique de largeur de bande, DBA, de chaque port PON, d'une pluralité d'intervalles adjacents à une plage de variation d'une pluralité d'intervalles d'ONU dans une séquence temporelle et des ONU correspondant à la pluralité d'intervalles, la configuration de la pluralité d'intervalles en tant que pluralité d'intervalles suspects, et la configuration des ONU correspondant à la pluralité d'intervalles suspects en tant que pluralité d'ONU suspectes avec une interférence de luminescence anormale de type rafale ; et
dans lequel la réalisation d'une surveillance en temps réel, par l'OLT de xPON, du nombre des opérations en ligne et hors ligne d'ONU, et l'acquisition de la pluralité d'ONU suspectes avec une interférence de luminescence anormale de type rafale au niveau de chaque port PON comprennent :
la réalisation d'un comptage, par l'OLT de xPON, du nombre des opérations en ligne et hors ligne d'ONU pendant une période définie de chaque port PON pour trouver une pluralité d'ONU anormales dont le nombre des opérations en ligne et hors ligne d'ONU n'est pas dans une plage prédéfinie de nombres d'opérations en ligne et hors ligne d'ONU, et la configuration de la pluralité d'ONU anormales en tant que pluralité d'ONU suspectes avec une interférence de luminescence anormale de type rafale.

2. Procédé selon la revendication 1, dans lequel la réalisation d'une surveillance en temps réel, par l'OLT de xPON, de la variation d'intervalle autorisé d'ONU ou du nombre des opérations en ligne et hors ligne d'ONU au niveau de chaque port PON, et l'acquisition de la pluralité d'ONU suspectes avec une interférence de luminescence anormale de type rafale au niveau de chaque port PON comprennent :
la réalisation d'une inspection, par l'OLT de xPON, d'un mécanisme de configuration d'intervalle de bande passante de liaison montante de chaque port PON, et la détermination du fait que le mécanisme de configuration d'intervalle de la bande passante de liaison montante de chaque port PON est un mécanisme de configuration d'intervalle dynamique ou un mécanisme de configuration d'intervalle statique ;
en réponse au mécanisme de configuration d'intervalle de la bande passante de liaison montante de chaque port PON déterminé comme étant le mécanisme de configuration d'intervalle dynamique, la réalisation d'une surveillance en temps réel, par l'OLT de xPON, de la variation d'intervalle autorisé d'ONU, et la détermination de la pluralité d'ONU suspectes avec une interférence de luminescence anormale de type rafale au niveau de chaque port PON ;
en réponse au mécanisme de configuration d'intervalle de la bande passante de liaison montante du port PON déterminé comme étant le mécanisme de configuration d'intervalle statique, la réalisation d'une surveillance en temps réel, par l'OLT de xPON, du nombre des opérations en ligne et hors ligne d'ONU, et la détermination de la pluralité d'ONU suspectes avec une interférence de luminescence anormale de type rafale au niveau de chaque port PON.

3. Procédé selon la revendication 2, dans lequel, en réponse au fait que le mécanisme de configuration d'intervalle de la bande passante de liaison montante de chaque port PON est le mécanisme de configuration d'intervalle dynamique, l'interférence de luminescence anormale de type rafale comprend une interférence de luminescence anormale de type rafale vers l'avant et une interférence de luminescence anormale de type rafale vers l'arrière; et la définition, respectivement, des poids d'interférence, par l'OLT de xPON, pour la pluralité d'ONU suspectes dans chaque période de détection pour obtenir la valeur de poids d'interférence de chaque ONU suspecte de la pluralité d'ONU suspectes comprend :
en réponse à l'interférence de luminescence anormale de type rafale qui est l'interférence de luminescence anormale de type rafale vers l'avant, la définition, par l'OLT de xPON, d'un poids d'interférence le plus élevé pour une ONU correspondant à un intervalle le plus en avant de la pluralité d'ONU suspectes dans chaque période de détection, dans lequel les poids d'interférence d'autres ONU suspectes diminuent séquentiellement selon un ordre d'intervalle vers l'arrière ;
en réponse à l'interférence de luminescence anormale de type rafale qui est l'interférence de luminescence anormale de type rafale vers l'arrière, la définition, par l'OLT de xPON, d'un poids d'interférence le plus élevé pour une ONU correspondant à un intervalle le plus en arrière de la pluralité d'ONU suspectes dans chaque période de détection, dans lequel les poids d'interférence d'autres ONU suspectes diminuent séquentiellement selon un ordre d'intervalle vers l'avant.

4. Procédé selon la revendication 1, dans lequel la réalisation d'un comptage, par l'OLT de xPON, du nombre des opérations en ligne et hors ligne d'ONU pendant la période définie de chaque port PON pour trouver la pluralité d'ONU anormales dont le nombre des opérations en ligne et hors ligne d'ONU n'est pas dans la plage prédéfinie des nombres des opérations en ligne et hors ligne d'ONU, comprend :
le comptage et l'enregistrement, par l'OLT de xPON selon une durée absolue, d'un premier ensemble des nombres des opérations en ligne et hors ligne d'ONU de chaque port PON pendant la période définie, ou le comptage et l'enregistrement, selon une durée relative, d'un deuxième ensemble des nombres des opérations en ligne et hors ligne d'ONU du port PON pendant la période définie en prenant une durée actuelle en tant que référence ; et
la comparaison, respectivement, par l'OLT de xPON, de chaque nombre dans le premier ensemble des nombres des opérations en ligne et hors ligne d'ONU ou de chaque nombre dans le deuxième ensemble des nombres des opérations en ligne et hors ligne d'ONU avec la plage prédéfinie des nombres des opérations en ligne et hors ligne d'ONU pour acquérir la pluralité d'ONU anormales ; dans lequel
la plage prédéfinie comprend une plage des nombres des opérations hors ligne d'ONU au niveau d'un port PON, une plage discrète de distribution statistique de nombres des opérations hors ligne d'ONU au niveau du port PON, et une plage de différence entre un nombre spécifique des opérations hors ligne d'ONU et une moyenne des nombres des opérations hors ligne d'ONU au niveau du port PON.

5. Appareil de positionnement d'une unité de réseau optique, ONU, avec une interférence de luminescence anormale de type rafale, comprenant :
un module de surveillance, qui est configuré pour réaliser une surveillance en temps réel, d'une variation d'intervalle autorisé d'ONU ou d'un nombre d'opérations en ligne et hors ligne d'ONU au niveau de chaque port de réseau optique passif PON, et pour acquérir une pluralité d'ONU suspectes avec une interférence de luminescence anormale de type rafale au niveau de chaque port PON, dans lequel le nombre d'opérations hors ligne d'ONU se réfère à un nombre de fois qu'une ONU qui fonctionne en utilisant un intervalle autorisé attribué par l'OLT est hors ligne en raison d'une interférence, l'interférence étant provoquée par une ONU au niveau d'un même port PON qui active le laser ou envoie des données dans un intervalle non autorisé sans commande de l'OLT ; et le nombre d'opérations en ligne d'ONU se réfère à un nombre de fois de remise en ligne après que l'ONU qui fonctionne en utilisant l'intervalle autorisé attribué par l'OLT est hors ligne en raison de l'interférence ; et
un module de positionnement qui est configuré pour réaliser un dépannage de la pluralité d'ONU suspectes pour obtenir des ONU à interférence avec une interférence de luminescence anormale de type rafale au niveau de chaque port PON ; **caractérisé en ce que** le module de positionnement est configuré pour :
définir, respectivement, des poids d'interférence pour la pluralité d'ONU suspectes dans chaque période de détection pour obtenir une valeur de poids d'interférence de chaque ONU suspecte de la pluralité d'ONU suspectes ; et
réaliser, séquentiellement, un dépannage de la pluralité d'ONU suspectes selon un ordre de taille de valeurs de poids d'interférence pour obtenir les ONU à interférence avec une interférence de luminescence anormale de type rafale au niveau de chaque port PON;
dans lequel le module de surveillance est configuré pour :
rechercher, en fonction d'un changement d'une relation correspondante entre un identifiant d'authentification d'enregistrement d'ONU et un intervalle autorisé d'ONU se produisant consécutivement dans une pluralité de périodes d'assignation dynamique de largeur de bande, DBA, de chaque port PON, une pluralité d'intervalles adjacents à une plage de variation d'une pluralité d'intervalles d'ONU dans une séquence temporelle et des ONU correspondant à la pluralité d'intervalles, configurer la pluralité d'intervalles en tant que pluralité d'intervalles suspects, et configurer les ONU correspondant à la pluralité d'intervalles suspects en tant que pluralité d'ONU suspectes avec une interférence de luminescence anormale de type rafale ; et
dans lequel le module de surveillance est configuré pour :
réaliser un comptage du nombre des opérations en ligne et hors ligne d'ONU pendant une période définie de chaque port PON pour trouver une pluralité d'ONU anormales dont le nombre des opérations en ligne et hors ligne d'ONU n'est pas dans une plage prédéfinie de nombre des opérations en ligne et hors ligne d'ONU, et configurer la pluralité d'ONU anormales en tant que pluralité d'ONU suspectes avec une interférence de luminescence anormale de type rafale.

6. Dispositif de positionnement d'une unité de réseau optique, ONU, avec une interférence de luminescence anormale de type rafale, comprenant : un processeur et une mémoire couplée au processeur; dans lequel la mémoire stocke un programme pour positionner une ONU avec une interférence de luminescence anormale de type rafale utilisable sur le processeur, et le programme pour positionner une ONU avec une interférence de luminescence anormale de type rafale, lorsqu'il est exécuté par le processeur, met en oeuvre des étapes du procédé de positionnement d'une ONU avec une interférence de luminescence anormale de type rafale selon l'une quelconque des revendications 1 à 4.

7. Support de stockage informatique, stockant un programme pour positionner une unité de réseau optique, ONU, avec une interférence de luminescence anormale de type rafale, dans lequel le programme pour positionner une ONU avec une interférence de luminescence anormale de type rafale, lorsqu'il est exécuté par un processeur, met en oeuvre des étapes du procédé de positionnement d'une ONU avec une interférence de luminescence anormale de type rafale selon l'une quelconque des revendications 1 à 4.
